# EUROPEAN PATENT SPECIFICATION

(11) **EP 2 119 581 B1**
(45) Date of publication and mention of the grant of the patent: **01.09.2010**
(21) Application number: 08425311.1
(22) Date of filing: 06.05.2008
(51) Int. Cl.: B60H 1/00

(54) **Air diffusing or distributing device with synthetic jets**
Luftdiffusor oder Verteilungsvorrichtung mit synthetischen Düsen
Dispositif de distribution et de diffusion d'air avec jets synthétiques

(43) Date of publication of application: 18.11.2009
(73) Proprietor: C.R.F. Società Consortile per Azioni, 10043 Orbassano (Torino) (IT)
(72) Inventor: Di Giusto, Nevio, c/o C.R.F. Società Consortile per Azioni, 10043 Orbassano (Torino) (IT); Alacqua, Stefano, c/o C.R.F. Società Consortile per Azioni, 10043 Orbassano (Torino) (IT); Perosino, Andrea, c/o C.R.F. Società Consortile per Azioni, 10043 Orbassano (Torino) (IT); Zanella, Alessandro, c/o C.R.F. Società Consortile per Azioni, 10043 Orbassano (Torino) (IT)
(74) Representative: Notaro, Giancarlo

(56) References cited:
- EP-A- 1 544 004
- EP-A- 1 544 089
- WO-A-2005/008348
- FR-A- 2 896 758
- VÁCLAV TESA? ET AL.: "No-moving-part hybrid-synthetic jet actuator" SENSORS AND ACTUATORS A: PHYSICAL, vol. 125, no. 2, 10 January 2006 (2006-01-10), pages 159-169, XP002499675 Elsevier B.V.

## Description

The present invention relates to air diffusing and distributing devices of the type comprising a main duct for a main air flow and means to deviate said main air flow toward any one of two or more outlet areas opening onto an external space or toward any one of two or more secondary ducts branching from the main duct.

The present invention is for example applicable to an air outlet vent for the dashboard of an auto-vehicle, or to an air outlet vent for an air conditioning device in a building or again for example to an air distributing device in an air-conditioning plant of an auto-vehicle or of a vehicle in general (for example a railway vehicle or an aircraft).

In the case of known air diffusing devices, for example in the case of air outlet vents on the dashboard of an auto-vehicle, the most traditional manner to give the air flow leaving the outlet a preferred direction is that of providing the vent with a plurality of orientable fins, with manual or electrical control. The drawback of this solution is that it involves an interference of the directional fins with the air flow with consequent loss of energy by said flow. What is indicated above applies in an identical manner also to the case of air distributing devices of known type, which traditionally include deflector elements to deviate the air flow in the desired direction, that involves penalising the characteristics (velocity and capacity) of the air flow.

The applicant has already proposed and developed air distributing and diffusing devices that exploit the Coanda effect to direct a main air flow in the desired direction (see for example EP-A-1 399 324, EP-A-1 399 686, EP-A-1 382 472, EP-A-1 585 642, EP-A-1 544 004, EP-A-1 544 005, EP-A-1 544 006, EP-A-1 544 007). This solution eliminates the need to provide for deflecting elements that influence the fluid-dynamic characteristics of the air flow, -so that they represent a significant step forward in the development of such devices.

A device according to the preamble of claim 1 is known from the article of Václav Tesar et al., "No-moving part hybrid-synthetic jet actuator", SENSORS AND ACTUATORS A: PHYSICAL, vol. 125, no.2, 10 January 2006 (2006-01-10), pages 159-169, XP002499675 Elsevier B.V..

The purpose of the present invention is to propose an alternative solution, that likewise possesses the advantage of not substantially influencing the characteristics of velocity and capacity of the main air flow, that is of general applicability, and that is also characterised on one hand by the simplicity of its construction and its reduced dimensions, and on the other hand by its reliability in operation.

In view of achieving this purpose, the invention **provides a device as set forth in claim 1.**

The use of "synthetic jets" (or "synjets") has already been proposed in the aeronautics field **(**US 6 471 477 B2), as well as in a patent held by the applicant relating to an application of such jets to an auto-vehicle (see EP-A-1 544 089**).**

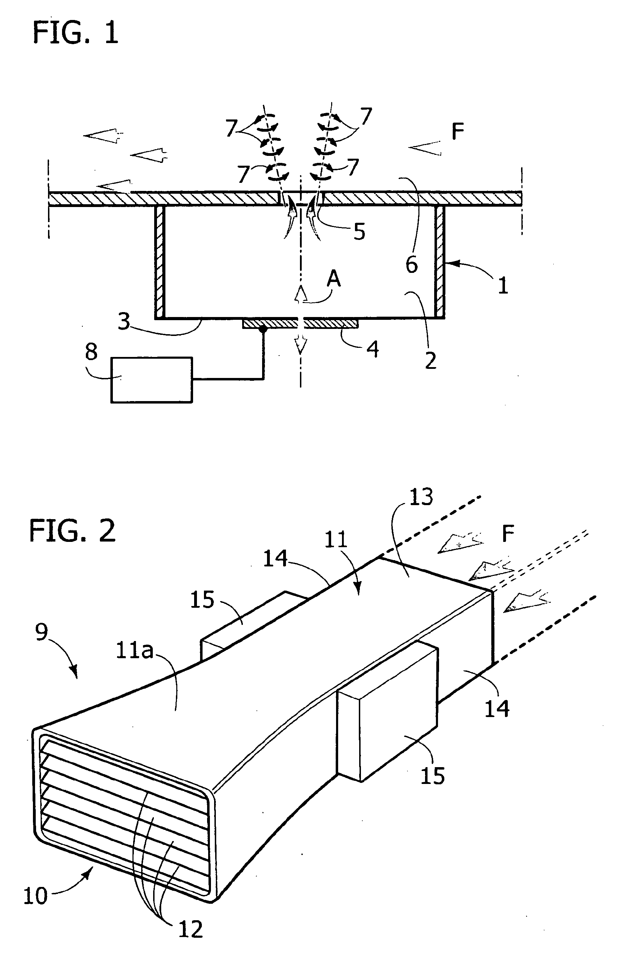

In general, by "jet" is indicated a flow of fluid that is generated by effect of the mixing of a current of a fluid within a second fluid. "Synthetic jets" have been studied relatively recently and are typically obtained by predisposing a hollow body 1 (see figure 1) defining within it a chamber 2 delimited on one side by a flexible metal lamina 3 to which is associated a piezoelectric element 4 that is subject to a contraction following on to the supply of electric power. On the opposite side, the chamber 2 communicates through an opening 5 to a space 6. The piezoelectric element 4 is supplied with electric power in a pulsating manner such as to subject the flexible membrane 3 to an alternating movement in the direction indicated by the arrow A, with predetermined frequency and amplitude. Said phenomenon does not involve the injection of an additional mass of air into the space 6, since the flows of air entering and leaving through the opening 5 are substantially equivalent. However, the flows exiting generate trains of vortices 7 disposed ring-wise around the axis of the opening 5. In figure 1, reference number 8 indicates diagrammatically an electronic control unit controlling the electric power supplied to the piezoelectric element 4.

The present invention is based on the idea of applying a synthetic jet generating device of the type illustrated in figure 1 to an air diffusing and distributing device.

The main advantage of the invention lies in the absence of fins or levers to deviate the air flow, with consequent elimination of the loss of energy connected with the presence of such elements. A further significant advantage of the invention lies in the fact that it can readily be applied in any field, and in particular in the automobile sector and in that of air-conditioning plants for buildings. A further significant advantage lies in the possibility of varying the synthetic jet generating device control logic at will and likewise the wave form of the command signal applied to it, such as to vary the frequency and/or amplitude of movement of the membrane 3, so as in consequence to vary the intensity of the synthetic jets 7. In this way it is possible to direct the airflow as preferred, and if desired also in a gradual and continuous manner, deviating the flow gradually from a first direction towards a second direction.

Further characteristics and advantages of the invention will be clear in the following description with reference to the attached drawings, provided as a simple non-limiting example, in which:
- figure 1 is a diagrammatic section view of a synthetic jet generating device usable in the device according to the invention,
- figure 2 is a diagrammatic prospective view of a first embodiment of the device according to the invention,
- figures 3 and 4 are partial section views at enlarged scale of a detail of the device in figure 2, in two different operating conditions,
- figures 5-7 are plan views illustrating three different operating conditions of the device in figure 2, and
- figures 8 and 9 are diagrammatic plan views illustrating two further embodiments of the device according to the invention.

In figure 2, reference number 9 indicates overall an air diffusing device associated with a vent 10 destined to be mounted on the dashboard of an auto-vehicle. The body of the diffusing device 9 comprises a main duct 11 through which an air of flow F moves and terminating in the vent 10, in correspondence with which for preference fins 12 are provided for, for example of the type orientable manually, to direct the flow vertically. The body of the main duct 11 presents an upper wall 13 and a lower wall (not visible in figure 2) opposed to one another and two lateral walls 14 that have an end portion in which they diverge from one another in the direction of an outlet vent 10, following a curved profile.

Two devices 15 to generate synthetic jets, each fundamentally of the type illustrated in figure 1, are prearranged adjacent to the two lateral walls 14, before the divergent end portion 11a of the main duct 11.

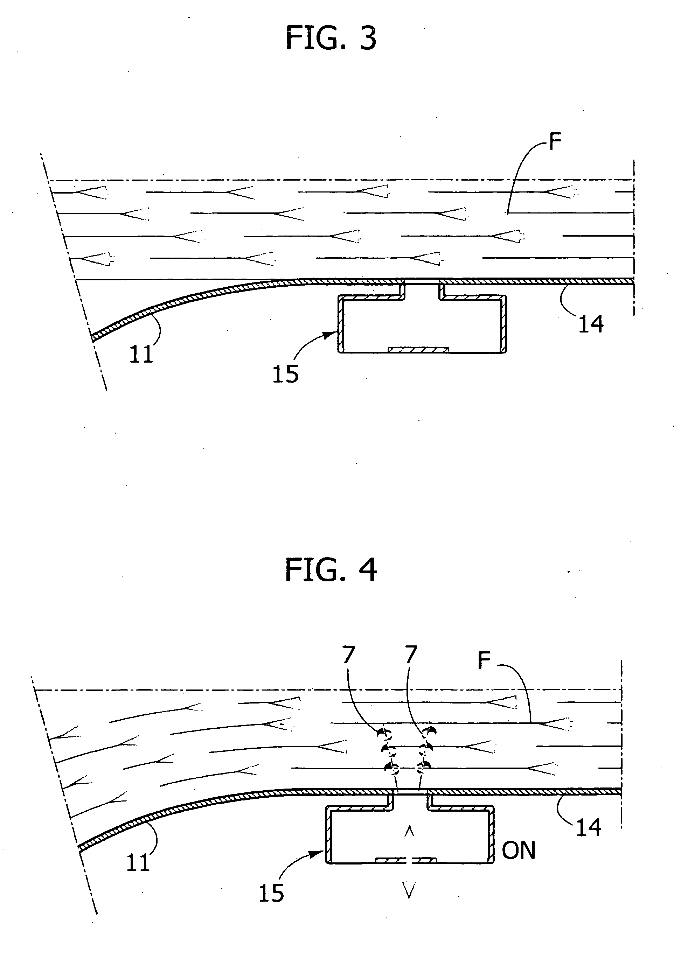

Figures 3 and 4 show the main duct 11 in section and one of the devices 15 to generate synthetic jets. Figure 3 illustrates the condition in which the device 15 is off, so that the main air flow F is substantially rectilinear. Figure 4 illustrates the deviation of the flow F that comes about when the synthetic jet generating device 15 is activated, with a predetermined frequency and amplitude. The emission of synthetic jets 7 into the flow F energises the boundary layer adjacent to the lateral wall 14, such that the flow F is encouraged to remain adherent to that wall, so as to be deviated toward a lateral zone of the outlet vent 10.

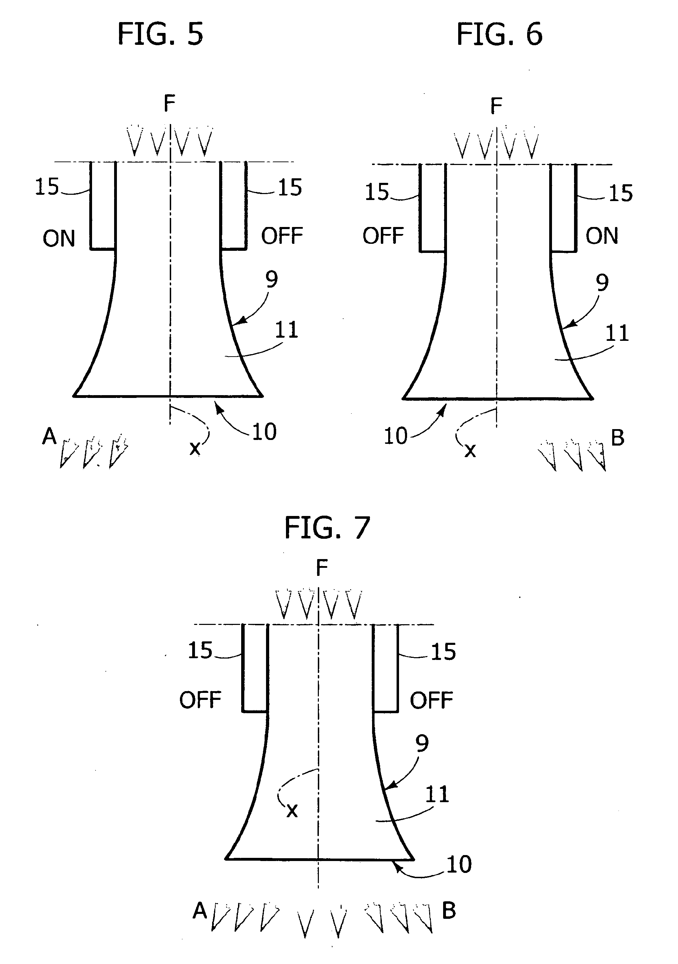

Figures 5-7 show how, by activating and deactivating the two synthetic jet generating devices 15 associated to the two lateral walls 14, it is possible to control the direction of the air flow leaving the vent 10. In the case of figure 5, the device 15 illustrated at the left is on, whereas the device 15 at the right is off. In this condition, the flow F is in the main guided in the direction A, laterally inclined (toward the left with reference to the figure) with respect to the axis X of the device. Deactivating the device 15 on the left and activating that on the right (figure 6) the flow is sent in the direction B inclined laterally toward the right (with reference to figure 6) with respect to the axis X. When both devices are off (figure 7) the prevalent part of the flow F leaves the vent 10 in the direction of the axis X, part of the flow being nevertheless also deviated in directions A and B.

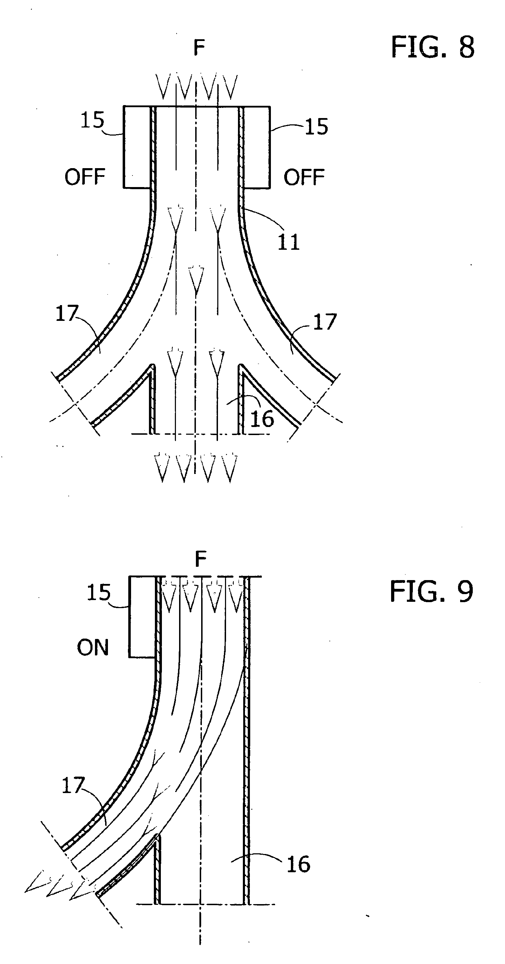

Figures 8 and 9 illustrate two examples of the application of the device according to the invention to an air distributing device, that could for example be used in the field of an air-conditioning plant for an auto-vehicle. In both cases, the main duct 11 flows into a plurality of secondary ducts that branch from it. In the case of figure 8, two lateral ducts 17, opposed to one another, branch from the central duct 16. In the case of figure 9, a single lateral duct 17 is provided alongside the central duct 16. In the case of figure 8, there are two synthetic jet generating devices 15 associated with the two sides of the main duct 11, whereas in the case of figure 9 there is a single generating device on the side of the duct 11 on which the secondary lateral duct 17 is situated. In the case of the embodiment in figure 8, when both generating devices 15 are off, most of the flow F is conveyed into the central secondary duct 16. Activation of one or other of the two devices 15 on the contrary causes the flow F to be deviated into one or other of the lateral secondary ducts 17. Similarly, in the case of figure 9, when the device 15 is off, the main flow F is conveyed for the most part into the secondary duct 16, whereas when the device 15 is on, it causes most of the flow F to be deviated into the lateral duct 17.

A significant possibility offered by the device according to the invention lies in the fact that the electronic unit 8 that controls the electric power supply to the piezoelectric element 4 may vary the duty cycle of the pulsed power supply to the piezoelectric element, that is it may vary the relationship between the duration of each pulse and the period between each pulse and the next. In this way, in the case for example of the embodiment illustrated in figures 2 and 5-7, it is possible to increase the degree of activation of one of the two synthetic jet generating devices 15 in a continuous manner, and at the same time to decrease the degree of activation of the other generating device 15 in a continuous manner, in such a way that the flow leaving the vent 10 may be deviated continuously from direction A to direction B. This characteristic may be exploited for example in the case of the outlet vent of an air conditioning device for a room in a building, so as to make the outflow oscillate continuously between one direction and the opposite one.

As will be clear from the above description, the device according to the invention may easily be adapted to being used as an air diffusing device, to vary the direction in which an air flow leaves a vent, or also as an air distributing device in any conditioning plant for a vehicle or for civil engineering applications. The invention is characterised by extreme simplicity of construction, reduced dimensions and high reliability and flexibility of application.

Naturally, the main of the invention holding good, construction details and embodiments may be widely varied with regard to what is described and illustrated here as a simple example, without thereby departing from the sphere of the present invention.

For example, the actuating element provided in each synthetic jet generating device may also be different from a piezoelectric actuator, for example in particular it may consist of an electromagnetic actuator (for example of the "voice coil" type for the reproduction of sound) or of an electromechanical actuator, for example of the type comprising a piston activated by an electric motor.

## Claims

1. Air diffusing or distributing device comprising a main duct (11) for a main air flow (F) and means to deviate said main air flow towards one or more outlet areas (A, X, B) opening onto an outside space or towards any one of two or more secondary ducts (16, 17) branching from the main duct,
**wherein** said air deviating means comprise a least one device (15) generating synthetic jets,
**wherein said main duct (11) has at least** one lateral wall (14) having an end portion with a curved profile diverging outwards in the direction of flow,
**characterized in that** said a least one device (15) generating synthetic jets is located adjacent to said lateral wall (14), before said divergent end portion of the lateral wall, and
**in that** said synthetic jet generating device (15) has a jet generating chamber (2) communicating with said main duct (11) through an opening in said lateral wall (14),
**so that when** said synthetic jet generating device is activated, it direct**s** within the main duct (11) a series of synthetic jets (7) which energise the **air flow** boundary layer adjacent to said lateral wall (14), so as to cause the main air flow (F) to **remain adherent to** said **diverging** lateral wall (14) and thus **to be maintained deviated** towards one of said outlet areas (A, B) situated on the extension of said lateral wall (14) or towards one or more of said secondary ducts (17) situated on the extension of said lateral wall (14).

2. Device according to claim 1, **characterised in that** said air deviating means comprise two synthetic jet generators (15) situated adjacent to two opposed lateral walls (14) of the main duct (11).

3. Device according to claim 1, **characterised in that** said means of deviation comprises a single synthetic jet generating device (15) situated adjacent to said lateral wall (14).

4. Device according to claim 2, **characterised in that** three outlet areas are provided for (A, X, B) including a central outlet area (X) and two lateral outlet areas (A, B) or three secondary ducts (17, 16, 17), comprising a central secondary duct (16) and two lateral secondary ducts (17) and **in that** the two synthetic jet generating devices (15) are disposed such as when only one of them is on the main air flow (F) is deviated towards a respective lateral outlet area (A, B) or towards a respective lateral duct (17), whereas when both of the generating devices (15) are off, the main flow (F) is prevalently directed to the central outlet area (X) or into the central secondary duct (16) and in part also into the lateral outlet areas (A, B) or into the lateral secondary ducts (17).

5. Device according to claim 1, **characterised in that** means (8) are associated to the or to each synthetic jet generating device (15) to vary the intensity of said synthetic jets (7).

6. Device according to claim 5, **characterised in that** each synthetic jet generating device comprises a body (1) defining a cavity (2) communicating through an opening (5) with a passage for said main flow (F) within said main duct (11), said cavity (2) being delimited on one side by a mobile wall (3) to which is associated an electrically-activated actuator element (4) and means (8) to control pulsed electric power supplied to said piezoelectric actuator element (4) in such a manner as to generate an alternating movement of said mobile wall (3) with predetermined frequency and amplitude, so as to generate said synthetic jets (7).

7. Device according to claim 6, **characterised in that** said actuator element is a piezoelectric actuator, or an electromagnetic actuator for example of the "voice coil" type used for the reproduction of sound, or an electromechanical actuator for example of the type comprising a piston moved by an electric motor.

8. Device according to claim 1, **characterised in that** it is in the form of an air outlet vent assembly having a body defining said main duct (11) terminating with a vent (10) said main duct (11) having two lateral walls (14) that diverge from one another in the direction of said vent (10).

9. Device according to claim 8, **characterised in that** it is predisposed to be assembled on the dashboard of an auto-vehicle.

## Patentansprüche

1. Luftdiffusions- bzw. Verteilungsvorrichtung, die eine Hauptleitung (11) für einen Haupt-Luftstrom (F) und eine Einrichtung zum Ableiten des Haupt-Luftstroms zu einem oder mehreren Auslassbereich/en (A, X, B) hin, der/die sich zu einem äußeren Raum öffnet/öffnen, oder zu einer beliebigen von zwei oder mehr sekundären Leitungen (16, 17) hin umfasst, die von der Hauptleitung abzweigen,
wobei die Luftableiteinrichtung wenigstens eine Vorrichtung (15) umfasst, die künstliche Strahlen erzeugt,
wobei die Hauptleitung (11) wenigstens eine seitliche Wand (14) aufweist, die einen Endabschnitt mit einem gekrümmten Profil hat, der sich in der Richtung des Stroms nach außen erweitert,
**dadurch gekennzeichnet, dass** die wenigstens eine Vorrichtung (15), die künstliche Strahlen erzeugt, vor dem sich erweiternden Endabschnitt der seitlichen Wand an die seitliche Wand (14) angrenzend angeordnet ist, und
**dadurch,** dass die Vorrichtung (15) zum Erzeugen künstlicher Strahlen eine Strahl-Erzeugungskammer (2) aufweist, die mit der Hauptleitung (11) über eine Öffnung in der seitlichen Wand in Verbindung steht,
so dass, wenn die Vorrichtung zum Erzeugen künstlicher Strahlen aktiviert wird, sie eine Reihe künstlicher Strahlen (7) im Inneren der Hauptleitung (11) leitet, die auf die Luftstrom-Grenzschicht an die seitliche Wand (14) angrenzend einwirken und veranlassen, dass der Haupt-Luftstrom (F) an der sich erweiternden seitlichen Wand (14) haften bleibt und so weiter zu einem der Auslassbereiche (A, B) hin abgelenkt wird, die sich an der Verlängerung der seitlichen Wand (14) befinden, oder zu einer oder mehreren der sekundären Leitungen (17) hin, die sich an der Verlängerung der seitlichen Wand (14) befindet/befinden.

2. Vorrichtung nach Anspruch 1, **dadurch gekennzeichnet, dass** die Luftableiteinrichtung zwei Einrichtungen (15) zum Erzeugen künstlicher Strahlen umfasst, die an zwei einander gegenüberliegende seitliche Wände (14) der Hauptleitung (11) angrenzend angeordnet sind.

3. Vorrichtung nach Anspruch 1, **dadurch gekennzeichnet, dass** die Einrichtung zum Ableiten eine einzelne Vorrichtung (15) zum Erzeugen künstlicher Strahlen umfasst, die an die seitliche Wand (14) angrenzend angeordnet sind.

4. Vorrichtung nach Anspruch 2, **dadurch gekennzeichnet, dass** drei Auslassbereiche für (A, X, B), die einen mittleren Auslassbereich (X) und zwei seitliche Auslassbereiche (A, B) enthalten, oder drei sekundäre Leitungen (17, 16, 17) vorhanden sind, die eine mittlere sekundäre Leitung (16) und zwei seitliche sekundäre Leitungen (17) umfassen, und dass die zwei Vorrichtungen (15) zum Erzeugen künstlicher Strahlen so angeordnet sind, dass, wenn nur einer von ihnen aktiv ist, der Haupt-Luftstrom (F) zu einem entsprechenden seitlichen Auslassbereich (A, B) hin oder zu einer entsprechenden seitlichen Leitung (17) hin abgelenkt wird, während, wenn beide Erzeugungsvorrichtungen (15) inaktiv sind, der Hauptstrom (15) vorwiegend zu dem mittleren Auslassbereich (X) oder in die mittlere sekundäre Leitung (16), und teilweise auch in die seitlichen Auslassbereiche (A, B) oder in die seitlichen sekundären Leitungen (17) hinein geleitet wird.

5. Vorrichtung nach Anspruch 1, **dadurch gekennzeichnet, dass** Einrichtungen (8) mit der oder mit jeder Vorrichtung (15) zum Erzeugen künstlicher Strahlen verbunden sind, um die Intensität der künstlichen Strahlen (7) zu verändern.

6. Vorrichtung nach Anspruch 5, **dadurch gekennzeichnet, dass** jede Vorrichtung zum Erzeugen künstlicher Strahlen einen Körper (1) umfasst, der einen Hohlraum (2) bildet, der über eine Öffnung (5) mit einem Durchlass für den Hauptstrom (F) innerhalb der Hauptleitung (11) in Verbindung steht, wobei der Hohlraum (2) an einer Seite durch eine bewegliche Wand (3) begrenzt wird, mit der ein elektrisch aktiviertes Betätigungselement (4) verbunden ist, sowie eine Einrichtung (8), mit der gepulster elektrischer Strom, der dem piezoelektrischem Betätigungselement (4) zugeführt wird, so gesteuert wird, dass eine wechselnde Bewegung der beweglichen Wand (3) mit vorgegebener Frequenz und Amplitude erzeugt wird, um die künstlichen Strahlen (7) zu erzeugen.

7. Vorrichtung nach Anspruch 6, **dadurch gekennzeichnet, dass** das Betätigungselement ein piezoelektrisches Betätigungselement oder ein elektromagnetisches Betätigungselement beispielsweise vom Schwingspulentyp ist, der für die Wiedergabe von Ton eingesetzt wird, oder ein elektromechanisches Betätigungselement, beispielsweise von dem Typ ist, der einen mittels eines Elektromotors bewegten Kolben umfasst.

8. Vorrichtung nach Anspruch 1, **dadurch gekennzeichnet, dass** sie die Form einer Luftauslass-Belüftungsanordnung hat, die einen Körper aufweist, der die Hauptleitung (11) bildet, die mit einer Belüftungsöffnung (10) endet, wobei die Hauptleitung (11) zwei seitliche Wände (14) hat, die in der Richtung der Belüftungsöffnung (10) auseinanderlaufen.

9. Vorrichtung nach Anspruch 8, **dadurch gekennzeichnet, dass** sie zur Montage am Armaturenbrett eines Kraftfahrzeuges bestimmt ist.

## Revendications

1. Dispositif de diffusion ou de distribution d'air, comprenant un conduit principal (11) pour un flux d'air principal (F) et des moyens pour dévier ledit flux d'air principal vers une ou plusieurs zones de sortie (A, X, B) débouchant dans un espace extérieur ou vers l'un quelconque de deux ou plusieurs conduits secondaires (16, 17) dérivant du conduit principal, dispositif dans lequel lesdits moyens de déviation d'air comprennent au moins un dispositif (15) générant des jets synthétiques, dans lequel ledit conduit principal (11) comporte au moins une paroi latérale (14) pourvue d'une portion extrême possédant un profil incurvé qui s'écarte vers l'extérieur dans la direction du flux, **caractérisé en ce que** ledit au moins un dispositif (15) générant des jets synthétiques est disposé de manière adjacente à ladite paroi latérale (14), avant ladite portion extrême divergente de la paroi latérale, et **en ce que** ledit dispositif générateur de jets synthétiques (15) possède une chambre génératrice de jets (2) qui communique avec ledit conduit principal (11) à travers une ouverture ménagée dans ladite paroi latérale (14), de sorte que, lorsque ledit dispositif générateur de jets synthétiques est actionné, il envoie à l'intérieur du conduit principal (11) une série de jets synthétiques (7) qui excitent la couche limite de flux d'air adjacente à ladite paroi latérale (14), de façon que le flux d'air principal (F) reste adhérent à ladite paroi latérale divergente (14) et continue donc à être dévié vers l'une desdites zones de sortie (A, B) situées sur l'extension de ladite paroi latérale (14) ou vers une ou plusieurs desdits conduits secondaires (17) situés sur l'extension de ladite paroi latérale (14).

2. Dispositif selon la revendication 1, **caractérisé en ce que** lesdits moyens de déviation d'air comprennent deux générateurs de jets synthétiques (15) disposés de manière adjacente aux deux parois latérales opposées (14) du conduit principal (11).

3. Dispositif selon la revendication 1, **caractérisé en ce que** lesdits moyens de déviation comprennent un unique dispositif générateur de jets synthétiques (15) disposé de manière adjacente à ladite paroi latérale (14).

4. Dispositif selon la revendication 2, **caractérisé en ce qu'**il est prévu trois zones de sortie (A, X, B), à savoir une zone de sortie centrale (X) et deux zones de sortie latérales (A, B), ou trois conduits secondaires (17, 16, 17), à savoir un conduit secondaire central (16) et deux conduits secondaires latéraux (17), et **en ce que** les deux dispositifs générateurs de jets synthétiques (15) sont disposés de façon que, lorsqu'un seul d'entre eux est en marche, le flux d'air principal (F) soit dévié vers une zone de sortie latérale correspondante (A, B) ou vers un conduit latéral correspondant (17), tandis que, lorsque les deux dispositifs générateurs (15) sont à l'arrêt, le flux principal (F) soit majoritairement dirigé vers la zone de sortie centrale (X) ou vers le conduit secondaire central (16) et en partie également vers les zones de sortie latérales (A, B) ou vers les conduits secondaires latéraux (17).

5. Dispositif selon la revendication 1, **caractérisé en ce que** des moyens (8) sont associés au ou à chaque dispositif générateur de jets synthétiques (15) pour varier l'intensité desdits jets synthétiques (7).

6. Dispositif selon la revendication 5, **caractérisé en ce que** chaque dispositif générateur de jets synthétiques comprend un corps (1), lequel définit une cavité (2) communiquant, à travers une ouverture (5), avec un passage pour ledit flux principal (F) ménagé à l'intérieur dudit conduit principal (11), ladite cavité (2) étant délimitée d'un côté par une paroi mobile (3) à laquelle est associé un élément actionneur à commande électrique (4), et des moyens (8) pour commander l'énergie électrique pulsée fournie audit élément actionneur piézoélectrique (4), de façon à imprimer à ladite paroi mobile (3) un mouvement alternatif d'une fréquence et d'une amplitude prédéterminées, de façon à générer lesdits jets synthétiques (7).

7. Dispositif selon la revendication 6, **caractérisé en ce que** ledit élément actionneur est un actionneur piézoélectrique ou un actionneur électromagnétique, par exemple du type « à bobine mobile » utilisé pour la reproduction du son, ou un actionneur électromagnétique par exemple du type comprenant un piston mû par un moteur électrique.

8. Dispositif selon la revendication 1, **caractérisé en ce qu'**il prend la forme d'un ensemble d'aération à sortie d'air dont le corps définissant ledit conduit principal (11) se termine par un aérateur (10), ledit conduit principal (11) comportant deux parois latérales (14) qui divergent l'une de l'autre dans la direction dudit aérateur (10).

9. Dispositif selon la revendication 8, **caractérisé en ce qu'**il est apte à être monté sur le tableau de bord d'un véhicule automobile.
